(19) **Europäisches Patentamt / European Patent Office / Office européen des brevets**

(11) **EP 3 728 388 B1**

(12) **FASCICULE DE BREVET EUROPEEN**

(45) Date de publication et mention de la délivrance du brevet:
**20.10.2021 Bulletin 2021/42**

(21) Numéro de dépôt: **18833456.9**

(22) Date de dépôt: **07.12.2018**

(51) Int Cl.:
*C08G 59/08* (2006.01)     *C08G 59/50* (2006.01)
*C08G 59/62* (2006.01)     *C08L 63/04* (2006.01)

(86) Numéro de dépôt international:
**PCT/FR2018/053150**

(87) Numéro de publication internationale:
**WO 2019/122575 (27.06.2019 Gazette 2019/26)**

(54) **COMPOSITION DE RÉSINES NOVOLAQUES FONCTIONNALISÉES ÉPOXYDE**

EPOXIDIERTE NOVOLAK HARZ-ZUSAMMENSETZUNG

EPOXY FUNCTIONALIZED NOVOLAC RESIN COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1762991**

(43) Date de publication de la demande:
**28.10.2020 Bulletin 2020/44**

(73) Titulaire: **COMPAGNIE GENERALE DES ETABLISSEMENTS MICHELIN**
**63000 Clermont-Ferrand (FR)**

(72) Inventeurs:
• PATAUT, Gaël
  **63040 CLERMONT-FERRAND CEDEX 9 (FR)**

• DEROUINEAU, Thibault
  **63040 CLERMONT-FERRAND CEDEX 9 (FR)**
• LUIZ, Laura
  **31440 CIERP-GAUD (FR)**
• DOISNEAU, David
  **63040 CLERMONT-FERRAND CEDEX 9 (FR)**

(74) Mandataire: **Louret, Sylvain**
**M.F.P. MICHELIN**
**Service juridique - Propriété Intellectuelle**
**CBS/CORP/J/PI - F35 - Site de Ladoux**
**23, place des Carmes - Déchaux**
**63040 Clermont-Ferrand Cedex 9 (FR)**

(56) Documents cités:
**WO-A1-2015/189310     WO-A1-2016/116468**

## Description

### Domaine technique de l'invention

La présente invention concerne le domaine des compositions de résines thermodurcissables et des composites comprenant de telles compositions. L'invention se rapporte également à un pneumatique comprenant ces stratifiés.

### Art antérieur

Un pneumatique dit « radial » comporte essentiellement une bande de roulement, deux bourrelets, chacun étant renforcé avec une tringle, deux flancs reliant les bourrelets à la bande de roulement, une armature de carcasse s'étendant d'un bourrelet à l'autre enroulée autour des deux tringles dans chaque bourrelet et comprenant un retournement disposé, par exemple, vers l'extérieur du pneumatique. Une armature de sommet rigide est disposée circonférentiellement entre l'armature de carcasse et la bande de roulement.

L'armature de sommet comprend généralement, et de manière connue, les éléments suivants :

- deux couches (ou nappes) croisées de triangulation de sommet consistant essentiellement en des renforts (généralement métalliques) formant chacune un angle d'environ 30 degrés avec la direction circonférentielle du pneumatique ;
- une ceinture de sommet consistant essentiellement en des renforts sensiblement parallèles à la direction circonférentielle du pneumatique, appelés souvent renforts à 0 degré même s'ils forment en général un angle non nul avec la direction circonférentielle, par exemple un angle compris entre 0 et 10 degrés.

De nombreux efforts ont été produits pour améliorer l'armature de sommet du pneumatique.

Le document US 5837077 décrit un pneumatique comportant une ceinture formée en enroulant plusieurs fois une bandelette continue en spirale, autour de la circonférence extérieure de la couche de carcasse, dans la direction circonférentielle du pneumatique. La bandelette comprend des fils de renfort enrobés de matériaux élastomères et présente initialement un profil ovalisé, requérant une étape de traitement mécanique afin d'aplanir le profil.

Le document EP 0101400 décrit un pneumatique radial ayant une pluralité de bandelettes annulaires semi-rigides disposées dans une portion de couronne du pneumatique. Les bandelettes s'étendent sensiblement à travers la partie de la bande de roulement du pneumatique. Les bandelettes comportent chacune des renforts fibreux incorporés dans une composition de résine époxyde, formant une structure en arceaux semi-rigides.

Pour une utilisation en pneumatique, la composition comportant les renforts fibreux constituant ces bandelettes doit présenter une température de transition vitreuse $T_g$ suffisamment élevée, d'au moins 160°C, pour que la bandelette supporte les étapes d'encollage et de cuisson du pneumatique, et en particulier conserve sa forme et ses propriétés. La composition doit également présenter un allongement à rupture supérieur à celui des renforts fibreux de manière à maintenir l'intégrité des bandelettes lorsqu'elles sont soumises à effort. Or il est difficile de trouver des compositions, en particulier à base de résines époxydes, ayant à la fois un allongement à rupture important et une $T_g$ élevée.

Par ailleurs, la composition doit, avant cuisson, présenter une viscosité suffisamment faible pour imprégner correctement le renfort fibreux, et assez élevée pour pouvoir être manipulée et mise en forme avant cuisson des bandelettes.

Or, en particulier dans le cas des compositions à base de résines époxydes, la réticulation commence dès la mise en présence de la résine et du durcisseur, ce qui provoque une augmentation progressive de la viscosité dans le temps.

Le durcisseur étant la plupart du temps solide à température ambiante, un bon mélangeage de la résine et du durcisseur nécessite soit de solubiliser au préalable le durcisseur dans un solvant, souvent de type acétone ou méthyl-éthyl-cétone, ce qui nécessitera l'élimination ultérieure dudit solvant, ajoutant une étape de procédé, et/ou de chauffer la composition à une température généralement comprise entre 40 et 100°C, augmentant la vitesse de réticulation et donc la viscosité du mélange.

Il est important de trouver une composition qui présente une faible vitesse de réticulation à température ambiante afin de pouvoir être stockée entre le moment où elle est constituée et le moment où elle est utilisée, soit au moins quelques jours, avantageusement une semaine, cette durée pendant laquelle la composition est utilisable étant communément appelée temps d'ouverture. On voit donc que la composition et la bandelette comportant cette composition doivent répondre à un ensemble complexe de critères. Or les propriétés d'un mélange de résines ne peuvent se déduire simplement des propriétés des résines prises isolément.

De nombreuses recherches portant sur des compositions de résines thermodurcissables ont été conduites par le passé.

Le document GB 2478343 divulgue un agent durcisseur de type méthylène bis-aniline permettant une faible vitesse de réticulation. Toutefois, les résines et l'agent durcisseur sont physiquement séparés afin de permettre le transport et le stockage de l'ensemble.

Le document US 8,779,036 enseigne des compositions ayant une bonne réactivité aux températures de réticulation tout en ayant une faible réactivité aux températures de stockage, ladite composition comprenant une résine époxyde, un agent durcisseur et un accélérateur consistant en un sel quaternaire d'ammonium ou un acide organique ou inorganique, soit une composition particulièrement complexe.

Le document CA 1,337,088 décrit une composition thermodurcissable ayant de bonnes qualités de processabilité et pouvant être conservée sur de longues périodes comprenant une résine particulière comprenant majoritairement un composé de type tetraglycidyle et un agent durcisseur aminé. Le document WO 2015/189310 A1 décrit un produit semi-fini comprenant un câble monotoron gommé in situ ou multi-torons gommé in situ noyé dans une composition de caoutchouc de calandrage, ainsi qu'un tel produit semi-fini cuit et un pneumatique comprenant un tel produit semi-fini.

Poursuivant ses recherches, la demanderesse a découvert une composition de résines simple comprenant un coupage de résines époxydes novolaques et un agent durcisseur particulier, ladite composition présentant de façon inattendue des caractéristiques de viscosité permettant de la conserver et d'imprégner des renforts fibreux avant réticulation, tout en présentant d'excellentes qualités de rigidité et une température de transition vitreuse suffisamment élevée après réticulation. Ainsi, les compositions conformes à la présente invention présentent un compromis processabilité / rigidité bien supérieur à celui des compositions connues et sont particulièrement aptes à être utilisées pour la constitution de composites, en particulier de composites pour pneumatiques.

De plus, la stabilité et la faible réactivité des compositions selon l'invention à des températures pouvant atteindre 100°C permet de liquéfier le durcisseur et les résines de ladite composition sans avoir besoin d'un solvant pour solubiliser le durcisseur.

**Description détaillée de l'invention**

L'invention concerne une composition de résines fonctionnalisées époxyde comprenant au moins :

- une première résine novolaque fonctionnalisée époxyde à base :

    - d'au moins un premier polyphénol aromatique comprenant au moins un noyau aromatique porteur d'au moins deux fonctions hydroxyles en position méta l'une par rapport à l'autre, les deux positions ortho d'au moins une des fonctions hydroxyles étant non substituées, et
    - d'un composé comprenant au moins une fonction aldéhyde ;

- une deuxième résine novolaque fonctionnalisée époxyde à base :

    - d'au moins un deuxième polyphénol aromatique comprenant au moins un noyau aromatique porteur d'au moins un radical alkyle et d'au moins deux fonctions hydroxyles en position méta l'une par rapport à l'autre, les deux positions ortho d'au moins une des fonctions hydroxyles étant non substituées, et
    - d'un composé comprenant au moins une fonction aldéhyde ;

- et un agent durcisseur choisi parmi les agents durcisseurs aminés ou phénoliques ; la masse molaire moyenne du groupe constitué par l'ensemble des résines novolaques époxydées de ladite composition étant comprise entre 550 et 650 g/mol, la fonctionnalité époxyde moyenne dudit groupe étant comprise entre 3 et 3,5 eq.époxyde/mol, ladite composition présentant une température de transition vitreuse $T_g$ d'au moins 160°C.

*Définitions*

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages en poids. Le sigle « pcr » signifie parties en poids pour cent parties de résines époxydes novolaques, en prenant en compte l'ensemble des résines époxydes novolaques présentes dans la composition.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ». Dans la présente, lorsqu'on désigne un intervalle de valeurs par l'expression "de a à b", on désigne également et préférentiellement l'intervalle représenté par l'expression "entre a et b".

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

Par « environ », on entend égal à plus ou moins 10%, avantageusement égal à plus ou moins 5%, de manière préférée égal à plus ou moins 2%.

Par temps d'ouverture, on désigne le temps pendant lequel une composition de résines est utilisable après mélange des différents constituants de ladite composition. Au-delà du temps d'ouverture, la composition de résine n'est plus utilisable pour l'application envisagée, en particulier car sa viscosité est trop élevée.

Par l'expression « équivalent molaire », bien connue de l'Homme du métier, il faut entendre le quotient entre le nombre de moles du composé ou de la fonction concerné et le nombre de moles du composé ou de la fonction de référence. Ainsi, 2 équivalents molaires du composé ou de la fonction B par rapport au composé ou à la fonction A représentent 2 moles du composé ou de la fonction B lorsqu'une mole du composé ou de la fonction A est utilisée.

Dans le présent document, par « recouvrement de bandelettes », ou chevauchement, on entend un agencement dont les bandelettes d'une nappe de bandelettes radialement extérieure recouvrent ou chevauchent les bandelettes de la nappe de bandelettes radialement intérieure, c'est-à-dire que la projection dans la direction radiale d'une bandelette sur la bandelette de niveau inférieur est non nulle. Le pourcentage de recouvrement peut varier selon les modes de réalisation. Ce recouvrement forme un couplage entre les nappes de bandelettes générant une cohésion de l'ensemble de la zone de renfort du sommet. Ce couplage permet en particulier une transmission d'efforts de cisaillement entre les nappes de bandelettes. On ne tient pas compte dans ce positionnement de la présence de la matrice de composition de caoutchouc.

Par « direction axiale », on entend une direction parallèle à l'axe de roulement du pneumatique.

Par « pneumatique », on entend tous les types de bandages élastiques soumis à une pression interne ou non.

Par « bande de roulement » d'un pneumatique, on entend une quantité de mélange élastomère délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

Dans le présent document, par « carcasse », ou « nappe carcasse », on entend une structure de renfort pour pneumatique sous forme d'une couche constituée d'une matrice en matériau élastomère dans laquelle des filaments ou fils, généralement textiles, sont agencés selon un alignement sensiblement parallèle et longitudinal. La nappe carcasse est avantageusement fabriquée à plat, en grande longueur, puis découpée aux dimensions adéquates pour la fabrication d'un pneumatique pour lequel la nappe carcasse est adaptée.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Résines époxydes novolaques

Les résines époxydes utilisables dans la présente invention sont des résines novolaques fonctionnalisées époxydes, également appelées résines époxydes novolaques, c'est-à-dire des résines époxydes obtenues à partir d'un aldéhyde et d'un polyphénol en milieu acide, le polyphénol étant en excès, et époxydées.

Une résine de type novolaque est également appelée résine « deux étapes » (« two-steps resin » ou « two-stages resin » en anglais) car elle nécessite l'utilisation d'un agent durcisseur pour être réticulée. La composition de résines selon l'invention est thermodurcissable.

Par l'expression « résine à base de », il faut bien entendu comprendre une résine comportant le mélange et/ou le produit de la réaction entre les différents constituants de base utilisés pour la condensation finale de cette résine, de préférence uniquement le produit de la réaction entre les différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Par "position méta l'une par rapport à l'autre", on entendra que les fonctions hydroxyle sont portées par des carbones du noyau aromatique séparés l'un de l'autre par un unique autre carbone du noyau aromatique.

Par "en position ortho d'une fonction", on entendra la position occupée par le carbone du noyau aromatique immédiatement adjacent au carbone du noyau aromatique portant la fonction.

Dans un mode de réalisation préféré, ledit premier polyphénol aromatique comprend au moins un noyau aromatique porteur de trois fonctions hydroxyles en position méta les unes par rapport aux autres.

De manière préférée, ledit premier polyphénol aromatique comprend un noyau aromatique à 6 atomes de carbone.

De manière préférée, ledit premier polyphénol aromatique comprend un noyau aromatique porteur uniquement de groupes hydroxyles.

De manière très préférée, ledit premier polyphénol aromatique est choisi dans le groupe constitué par le 1,3-benzènediol, communément appelé résorcinol, et le 1,3,5-benzènetriol, communément appelé phloroglucinol.

De manière préférée, ledit deuxième polyphénol aromatique comprend un noyau aromatique à 6 atomes de carbone.

De manière préférée, ledit deuxième polyphénol aromatique comprend un noyau aromatique porteur d'un radical alkyle comprenant de 1 à 5 atomes de carbone, avantageusement de 1 à 4 atomes de carbone, préférentiellement de 1 à 3 atomes de carbone, de manière préférée de 1 à 2 atomes de carbone, et de façon très préférentielle 1 atome de carbone.

De manière très préférée, ledit deuxième polyphénol aromatique est choisi dans le groupe constitué par le 4-methyl-1,3-benzènediol, communément appelé 4-methyl-résorcinol, et le 4-methyl-1,3,5-benzènetriol, communément appelé 4-methyl-phloroglucinol.

Le composé comprenant au moins une fonction aldéhyde à base de ladite première résine novolaque peut être différent ou identique du composé comprenant au moins une fonction aldéhyde à base de ladite deuxième résine novolaque tout en restant dans le cadre décrit ci-après. Dans la suite de la description, par « le composé comprenant au moins une fonction aldéhyde », on entend donc aussi bien le composé comprenant au moins une fonction aldéhyde à base de ladite première résine novolaque que le composé comprenant au moins une fonction aldéhyde à base de ladite deuxième résine novolaque.

Dans un mode de réalisation, le composé comprenant au moins une fonction aldéhyde comprend, indépendamment pour ladite première résine novolaque et ladite deuxième résine novolaque, un noyau aromatique porteur d'au moins une fonction aldéhyde.

Ledit noyau aromatique est choisi dans le groupe constitué par un noyau benzénique, un noyau furanique, un noyau thiophénique et un noyau pyrrolique, avantageusement un noyau benzènique et un noyau furanique. Ledit noyau aromatique est avantageusement également porteur d'un radical carbonylaklyle et/ou hydroxylalkyle.

Par radical carbonylalkyle, on entend un radical monovalent de formule $-C_nH_{2n}-CHO$, où « CHO » représente une fonction aldéhyde, dans laquelle le carbone est lié par une liaison covalente double à l'atome d'oxygène et par une liaison covalente simple à l'atome d'hydrogène, et n représente un entier allant de 0 à 10, avantageusement de 0 à 5, préférentiellement de 0 à 3 et très préférentiellement de 0 à 1. Lorsque n est égal à 0, cela signifie que le groupe -CHO est directement porté par le noyau aromatique.

Par radical hydroxylalkyle, on entend un radical monovalent de formule $-C_nH_{2n}-OH$, où « OH » représente un groupe hydroxyle, et n représente un entier allant de 1 à 10, avantageusement de 1 à 5, préférentiellement de 1 à 3 et très préférentiellement égal à 1.

Dans un arrangement préféré, ledit noyau aromatique est porteur de deux fonctions aldéhydes, de manière avantageuse de deux groupes hydrogénocarbonyles.

Dans un autre arrangement préféré, ledit noyau aromatique est porteur d'une fonction hydroxyle et d'une fonction carbonyle, avantageusement d'un groupe hydroxyméthyle et d'un groupe hydrogénocarbonyle.

De manière préférée, ledit composé comprenant au moins une fonction aldéhyde est choisi, indépendamment pour ladite première résine novolaque et ladite deuxième résine novolaque, parmi le formaldéhyde, le furfuraldéhyde, le 2,5-furanedicarboxaldéhyde, le 5-hydroxyméthylfurfural, le 1-hydroxyméthylbenzène-4-carboxaldéhyde, le 1,2-benzène-dicarboxaldéhyde, le 1,3-benzène-dicarboxaldéhyde et le 1,4-benzène-dicarboxaldéhyde. De manière très préférée, ledit composé comprenant au moins une fonction aldéhyde est le formaldéhyde.

Conformément à l'invention, lesdites première et deuxième résines novolaques sont fonctionnalisées époxyde. La fonctionnalisation époxyde est réalisée de toute manière bien connue de l'Homme du métier, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82, avantageusement par réaction avec l'épichlorydrine.

De telles résines époxydes novolaques époxydées sont individuellement bien connues de l'Homme du métier et disponibles commercialement. A titre d'exemple, on citera la résine époxyde novolaque crésol araldite ECN 1299 de la société Hunstman, ou la résine époxyde novolaque phénol Epikote 893 de la société Momentive.

La proportion desdites première et deuxième résines novolaques fonctionnalisées époxyde dans la composition de résines selon l'invention est telle que la masse molaire moyenne du groupe constitué par l'ensemble des résines époxydes novolaques de ladite composition est comprise entre 550 et 650 g/mol, et telle que la fonctionnalité époxyde moyenne dudit groupe est comprise entre 3 et 3,5 eq.époxyde/mol, ou encore que la masse par équivalent époxyde est comprise entre 190 et 200 g/eq.époxyde.

Par fonctionnalité époxyde moyenne, on entend le nombre moyen $F$ de fonctions époxyde portées par une mole de résine époxyde.

La masse par équivalent époxyde, exprimée en g/eq.époxyde, bien connue de l'Homme du métier sous le terme anglais « *Weight per epoxy équivalent* » (WPE) est la masse de résine époxyde comprenant une fonctionnalité époxyde. *WPE* est lié à F par la relation :

$$WPE = M_n / F$$

où $M_n$ représente la masse molaire moyenne en poids de la résine époxyde en g/mol.

La teneur massique en époxyde $p$ d'une résine époxyde est déterminée selon la norme ASTM D-1652-04. La teneur massique en %poids et WPE sont liés par la relation :

$$WPE = 43.100 / p$$

De manière avantageuse, la proportion desdites première et deuxième résines novolaques fonctionnalisées époxyde dans la composition de résines selon l'invention est telle que le rapport molaire de ladite deuxième résine novolaque fonctionalisée époxyde sur ladite première résine novolaque fonctionalisée époxyde est compris entre 1:4 et 1:1, avantageusement entre 1:3,5 et 1:1,5, de manière préférée entre 1:3 et 1:2.

### Agent durcisseur

Conformément à l'invention, la composition de résines comprend un agent durcisseur choisi parmi les agents durcisseurs aminé et phénolique.

L'agent durcisseur utilisé dans la composition de résines selon l'invention permet la réticulation de ladite composition lorsqu'elle est portée à une température appropriée, dite température de cuisson. De manière avantageuse, la température de cuisson, comprise entre 160 et 220°C, avantageusement entre 170 et 210°C et très avantageusement entre 180 et 200°C, est atteinte rapidement, c'est-à-dire avec une montée en température d'au moins 10°C/min, préférentiellement, 20°C/min et de manière avantageuse 30°C/min pour que la composition réticulée ait la $T_g$ désirée. L'utilisation de températures plus basses permet d'atteindre une réticulation totale si l'on attend le temps nécessaires, mais avec une $T_g$ de la composition réticulée qui sera plus faible qu'attendue.

Ledit agent durcisseur est sélectionné pour que, après mélangeage, la composition ne réticule pas, ou peu, jusqu'au moment de son utilisation, c'est-à-dire pendant tout le temps d'ouverture. Ledit agent durcisseur doit donc être peu actif à température ambiante pour que le temps d'ouverture soit suffisant et assez actif à la température de cuisson pour que la composition de résines réticule totalement.

Lorsque ledit agent durcisseur est un agent durcisseur aminé, il comprend au moins deux fonctions amines primaires situées sur au moins (c'est-à-dire un ou plusieurs) un cycle aromatique à six atomes, ledit au moins un cycle aromatique à six atomes comportant :

    o au moins une fonction amine primaire, et
    o au moins deux radicaux Ri, identiques ou différents, choisis dans le groupe constitué par les radicaux alkyles linéaires ou ramifiés en $C_1$-$C_6$, les halogènes, et les éthers, les cétones et les esters substitués par des radicaux alkyles linéaires ou ramifiés en $C_1$-$C_6$,

de telle sorte que l'au moins un cycle aromatique à six atomes ne comprenne pas d'atome d'hydrogène situé en position ortho par rapport aux fonctions amines primaires, ledit durcisseur aminé comprenant au moins une deuxième fonction amine primaire située sur ledit au moins un cycle aromatique à six atomes ou sur un éventuel second cycle aromatique à six atomes dudit durcisseur aminé.

En d'autres termes, le durcisseur aminé comprend un ou plusieurs cycles aromatiques à six atomes et au moins deux fonctions amines primaires situées sur un seul ou répartis sur plusieurs de ces cycles aromatiques à six atomes.

De manière bien connue de l'homme du métier, on entend par fonction amine primaire une fonction aminée dans laquelle l'atome d'azote est lié à deux atomes d'hydrogène.

De préférence, le durcisseur aminé comprend de 1 à 3, de préférence encore 1 ou 2 cycles aromatiques à six atomes.

De préférence, le durcisseur aminé comprend de 2 à 4, de préférence encore 2 fonctions amines primaires situées sur au moins cycle aromatique à six atome du durcisseur aminé.

Les halogènes susceptibles de constituer les radicaux $R_i$ sont avantageusement choisis dans le groupe constitué par les atomes de fluor, de chlore, de brome et d'iode. De préférence, les halogènes sont choisis dans le groupe constitué par les atomes de chlore et de brome, de préférence encore les halogènes sont des atomes de chlore.

Selon un premier mode de réalisation de la présente invention, le durcisseur aminé peut comprendre un cycle aromatique à six atomes comportant :

- o au moins deux fonctions amines primaire, et
- o au moins deux radicaux $R_i$, identiques ou différents, choisis dans le groupe constitué par les radicaux alkyles linéaires ou ramifiés en $C_1$-$C_6$, les halogènes, et les éthers, les cétones et les esters substitués par des radicaux alkyles linéaires ou ramifiés en $C_1$-$C_6$,

de sorte que ledit cycle ne comprenne pas d'atome d'hydrogène situé en position ortho par rapport aux fonctions amines primaires.

Selon un deuxième mode de réalisation de la présente invention, le durcisseur aminé peut également comprendre au moins deux cycles aromatiques à six atomes, identiques ou différents, lesdits cycles comportant chacun :

- o au moins une fonction amine primaire, et
- o au moins deux radicaux $R_i$, identiques ou différents, choisis dans le groupe constitué par les radicaux alkyles linéaires ou ramifiés en $C_1$-$C_6$, les halogènes, et les éthers, les cétones et les esters substitués par des radicaux alkyles linéaires ou ramifiés en $C_1$-$C_6$,

de telle sorte que lesdits cycles ne comprennent pas d'atome d'hydrogène situé en position ortho par rapport aux fonctions amines primaires.

Selon un autre mode de réalisation, le durcisseur aminé peut également comprendre plusieurs cycles aromatiques à six atomes et au moins deux fonctions amines primaires situés uniquement sur l'un des cycles aromatiques.

Lorsque le durcisseur aminé comprend plusieurs (c'est-à-dire au moins deux) cycles aromatiques à six atomes, ces cycles peuvent être identiques ou différents. Ils peuvent par exemple différer les uns des autres par la nature des atomes constituant lesdits cycles et/ou par le nombre de fonctions amines primaires situées sur lesdits cycles et/ou par la nature et/ou le nombre des radicaux Ri disposés sur lesdits cycles et/ou par la position des fonctions amines primaires et radicaux Ri sur lesdits cycles. De préférence, lorsque le durcisseur aminé comprend plusieurs cycles aromatiques à six atomes, ces cycles sont identiques.

Dans l'expression « les éthers, les cétones et les esters substitués par des radicaux alkyles linéaires ou ramifiés en C1-C6 », l'homme du métier comprend bien que les termes « substitués par des radicaux alkyles linéaires ou ramifiés en C1-C6 » se rapportent à chacun des éthers, cétones et esters.

Quel que soit le mode de réalisation de la présente invention, le durcisseur aminé comprend préférentiellement au moins deux radicaux $R_i$, identiques ou différents, choisis dans le groupe constitué par les radicaux alkyles linéaires ou ramifiés en C1-C6, les halogènes, et les éthers, substitués par des radicaux alkyles linéaires ou ramifiés en C1-C6, avantageusement choisis dans le groupe constitué par les radicaux alkyles linéaires ou ramifiés en C1-C6 et les halogènes.

De manière très préférée, les radicaux Ri sont choisis identiques ou différents dans le groupe constitué par les radicaux méthyle, éthyle, propyle et l'atome de chlore.

Quel que soit le mode de réalisation de la présente invention, les atomes des cycles aromatiques du durcisseur aminé peuvent être des atomes de carbone, et éventuellement comprendre des atomes d'azote. De préférence, tous les atomes des cycles aromatiques du durcisseur aminé sont des atomes de carbone. En d'autres termes, les cycles aromatiques à six atomes du durcisseur aminé sont préférentiellement des cycles aromatiques à six atomes de carbone.

Parmi les agents durcisseurs particulièrement préférés, on peut citer le 4,4'-methylenebis(2,6-diethylaniline) (MDEA), le 4,4'-methylenebis(2,6-diisopropylaniline) (MDIPA), le 4,4'-methylenebis(2-isopropyl-6-méthylaniline) (MMIPA), le 4,4'-methylenebis(3-chloro-2,6-diéthylaniline) (MCDEA) et le 2,4,6-triméthyl-1,3-phénylènediamine.

A titre d'exemple de durcisseurs aminés disponibles dans le commerce et utilisables dans le cadre de la présente invention, on peut citer par exemple le « Lonzacure MDIPA », le « Lonzacure MDEA » ou le « Lonzacure MCDEA » de la société Lonza, et le 2,4,6-triméthyl-1,3-phénylènediamine de la société Sigma Aldrich.

La quantité d'agent durcisseur aminé dans la composition selon l'invention est ajustée de manière à ce qu'il y ait 2 équivalents molaires époxyde par fonction amine. Au-delà de cette valeur, la réticulation ne sera pas totale et la $T_g$ de la composition réticulée sera inférieure à la $T_g$ attendue.

Lorsque ledit agent durcisseur est un agent durcisseur phénolique, il comprend au moins deux fonctions hydroxyles situées sur au moins (c'est-à-dire un ou plusieurs) un cycle aromatique à six atomes de carbone, au moins une position ortho de chacune desdites fonctions hydroxyles étant non substituée.

De manière avantageuse, ledit agent durcisseur phénolique comprend un ou deux cycles aromatiques à six atomes de carbone, préférentiellement un cycle aromatique à six atomes de carbone.

Dans un arrangement préféré, ledit agent durcisseur phénolique comprend au moins trois fonctions hydroxyles.

De manière très préférée, ledit agent durcisseur phénolique est choisi parmi le 1,3-dihydroxybenzène (résorcinol), le 1,2-dihydroxybenzène (catéchol), le 1,3,5-trihydroxybenzène (phloroglucinol), le 2-méthyl-1,3,5-trihydroxybenzène et le 4,4'-thiodirésorcinol (résorcinolsulfide), très avantageusement, ledit agent durcisseur phénolique est le phloroglucinol.

La quantité d'agent durcisseur phénolique dans la composition selon l'invention est ajustée de manière à ce qu'il y ait de 0,5 à 1,5 équivalent molaire époxyde par fonction hydroxyle, plus préférentiellement de 0,75 à 1,25 équivalent molaire, avantageusement de 0,9 à 1,1 équivalent molaire, très avantageusement 1 équivalent molaire époxyde par fonction hydroxyle.

L'agent durcisseur tel que décrit ci-dessus permet à la composition selon l'invention de ne réagir totalement que lorsqu'elle est portée à une température suffisante permettant la cuisson de la composition selon l'invention, au cours de laquelle l'agent durcisseur et le coupage de résines de ladite composition réticulent totalement, et de conserver des propriétés satisfaisantes à température ambiante, en particulier en terme de viscosité, sur l'ensemble du temps d'ouverture. Ainsi, la composition selon l'invention présente un temps d'ouverture d'au moins 5 j, avantageusement d'au moins une semaine.

La composition de résines peut donc se trouver sous la forme d'un mélange des résines de type époxydes novolaques phénol et crésol et d'un agent durcisseur n'ayant pas encore réagi l'un avec l'autre, ou bien sous la forme d'un mélange des résines de type époxydes novolaques phénol et crésol et d'un agent durcisseur ayant partiellement réagi l'un avec l'autre, ou bien encore sous la forme d'un mélange des résines de type époxydes novolaques phénol et crésol et d'un agent durcisseur ayant, au moins pour l'un d'entre eux, complètement réagi avec l'autre.

### Additifs

La composition de résines selon l'invention comprend avantageusement des charges renforçantes (silice, noir de carbone), des charges élastomériques (Kane Ace, de chez Kaneka) ou des charges thermoplastiques. De manière préférée, la composition de résines selon l'invention comprend des charges thermoplastiques telles que des microbilles thermoplastiques. Un exemple de microbilles thermoplastiques utiles aux besoins de l'invention est la poudre PA12 commercialisée par la société Arkema sous la dénomination Orgasol.

Lorsqu'une charge renforçante, élastomérique ou thermoplastique est utilisée, avantageusement une charge thermoplastique, elle l'est à des teneurs comprises entre 0,1 et 1,5 pcr, avantageusement entre 0,2 et 1 pcr. En dessous de 0,1 pcr, l'effet de la présence de la charge n'est pas sensible. Au-delà de 1,5 pcr, l'augmentation de viscosité ou l'abaissement de la température vitreuse de la composition réticulée est trop important.

L'ajout, en particulier d'une charge thermoplastique, permet d'augmenter la viscosité de la composition crue, c'est-à-dire avant cuisson, ainsi que d'augmenter l'allongement à rupture de la composition réticulée, mais au détriment de la température de transition vitreuse de la composition réticulée qui décroît.

Les compositions de résines selon l'invention présentent à cru des viscosités permettant de mettre en œuvre lesdites compositions, en particulier pour la constitution de composites, qui de par leur stabilité peuvent être conservées au moins 5 jours à température ambiante. La stabilité des compositions selon l'invention permet en outre de réaliser le mélange des résines et de l'agent durcisseur sans qu'il soit besoin d'utiliser un solvant pour solubiliser l'un ou l'autre.

De plus, les compositions selon l'invention présentent à cuit, c'est-à-dire après polymérisation, des températures de transition vitreuses élevées, d'au moins 160°C et un allongement à rupture important, supérieur à celui des fibres employées lors de la constitution de composites.

### Composite

L'invention a pour autre objet un composite à base au moins d'une fibre et de la composition de résines selon l'invention.

Par fibre, on entend un élément présentant une longueur au moins 10 fois plus grande que la plus grande dimension de sa section, quelle que soit la forme de cette dernière : circulaire, elliptique, oblongue, polygonale, notamment rectangulaire ou carrée ou ovale. Dans le cas d'une section rectangulaire, la fibre présente la forme d'une bande.

La fibre peut être métallique ou textile.

Une fibre métallique peut être un monofilament élémentaire métallique. Un tel monofilament élémentaire métallique comprend une âme en acier, éventuellement revêtue d'une ou plusieurs couches d'un revêtement qui peut comprendre un métal choisi parmi le zinc, le cuivre, l'étain, le cobalt et les alliages de ces métaux.

Une fibre métallique peut être un assemblage de plusieurs monofilaments élémentaires métalliques tels que décrits ci-dessus, assemblés ensemble en hélice, par exemple par câblage ou retordage des monofilaments élémentaires métalliques pour former, par exemple des câbles à couches comprenant plusieurs couches concentriques de monofilaments élémentaires métalliques ou des câbles à torons, chaque toron comprenant plusieurs couches concentriques de monofilaments élémentaires métalliques.

Une fibre textile peut être un monofilament élémentaire textile. Ce monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne. Chaque monofilament élémentaire textile présente une section sensiblement circulaire présentant un diamètre allant par exemple de 2 $\mu$m à 100 $\mu$m.

Une fibre textile peut être un assemblage de plusieurs monofilaments élémentaires textiles tels que définis ci-dessus, également appelé brin. Un brin comprend de préférence plus de 10 monofilaments élémentaires textiles, de préférence plus de 100 monofilaments élémentaires textiles et plus préférentiellement plus de 500 monofilaments élémentaires textiles.

Une fibre textile peut également être un assemblage de plusieurs brins tels que définis ci-dessus.

Ladite fibre textile est avantageusement de type polyester, avantageusement de type polyéthylène téréphtalate, polyamide, verre, carbone, quartz ou basalte.

Ladite fibre textile est avantageusement revêtu d'une ou plusieurs couches d'un agent de liaison, couramment appelé ensimage, adaptées à la composition selon l'invention à base de résines époxydes novolaque.

Dans un arrangement préféré, le composite comprend plusieurs fibres agencées côte à côte selon une direction principale.

Dans un autre arrangement préféré, le composite comprend plusieurs fibres assemblées en tricot ou en tissus.

Par tricot, on entend un assemblage de fibres telles que définis ci-dessus et comprenant des mailles formées par une ou plusieurs de ces fibres. Chaque maille comprend une boucle entrelacée avec une autre boucle. On peut mentionner par exemple les tricots de contexture jersey ou à côte anglaise pour les tricots à mailles cueillies et les tricots de contexture charmeuse ou atlas pour les tricots à mailles jetées.

Par tissu, on entend un assemblage d'une première famille de fibres, appelé fibres de chaine, sensiblement parallèles entre eux, et d'une deuxième famille de fibres, appelé fibres de trame, sensiblement parallèles entre eux. De préférence, les fibres de la première famille sont sensiblement perpendiculaires aux fibres de la deuxième famille.

La composition de résines selon l'invention est particulièrement adaptée pour la réalisation de composites de type « Prepregs » bien connus de l'Homme du métier au cours de laquelle la au moins une fibre est imprégnée dans un moule par la composition de résines selon l'invention. À cette fin et comme connu de l'Homme du métier, il est donc essentiel que la viscosité de la composition de résines selon l'invention à l'état cru, c'est-à-dire avant cuisson, soit suffisamment faible pour imprégner correctement ladite au moins une fibre, et suffisamment importante pour que l'imprégnation à chaud soit réalisé de manière homogène, sans que la composition ne coule hors ou sur le dispositif d'imprégnation, c'est-à-dire soit comprise, mesurée à 65°C, entre 2,5 et 10 Pa.s, avantageusement entre 2,5 et 9 Pa.s.

Le composite selon l'invention est réalisé par imprégnation de la ou des fibres par la composition de résines selon l'invention, quel que soit le mode de réalisation, et en particulier d'agencement de la ou des fibres.

Le composite conforme à l'invention peut être à l'état cru (avant réticulation) ou à l'état cuit (après réticulation). Le composite est cuit après mise en contact de ladite au moins une fibre avec la composition de résines selon l'invention.

Le composite conforme à l'invention est avantageusement mis en forme, sous forme de couche de composite. Par couche de composite, on entend que le composite selon l'invention se présente sous forme d'un élément dont la longueur et la largeur sont supérieurs d'un facteur au moins 10 à l'épaisseur.

### Article semi-fini

L'invention a également pour objet un article semi fini comprenant un composite selon l'invention enrobé d'une matrice de composition de caoutchouc.

Ladite matrice de composition de caoutchouc est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant une zone de sommet conforme à l'invention).

***Pneumatique***

L'invention a également pour objet un pneumatique comprenant un composite, une composition, ou un article semi-fini selon l'invention.

De manière particulière, l'invention concerne un pneumatique comprenant une nappe carcasse reliant deux bourrelets par l'intermédiaire de deux flancs, ladite nappe carcasse étant surmontée radialement vers l'extérieur du pneumatique par une zone de renfort de sommet et elle-même surmontée radialement vers l'extérieur du pneumatique par une bande de roulement, la zone de renfort de sommet comprenant une pluralité de bandelettes de renfort disposées sur au moins deux nappes de bandelettes, une première nappe de bandelettes radialement à l'intérieur et une deuxième nappe de bandelettes radialement à l'extérieur, les bandelettes de ladite deuxième nappe de bandelettes recouvrant les bandelettes de ladite première nappe de bandelettes d'au moins 20%, lesdites bandelettes desdites première et deuxième nappe de bandelettes étant disposées de manière juxtaposées et avec un angle compris entre 0 et 10° par rapport à la direction circonférentielle, chaque nappe de bandelettes étant noyée dans une matrice de composition de caoutchouc qui présente, à l'état réticulé, un module sécant en extension à 10% d'allongement supérieur à 10 MPa, caractérisé en ce que les bandelettes de renfort sont constituées par un stratifié d'au moins 2 couches de composites selon l'un des arrangement quelconque de l'invention, enrobées d'une matrice polymérique.

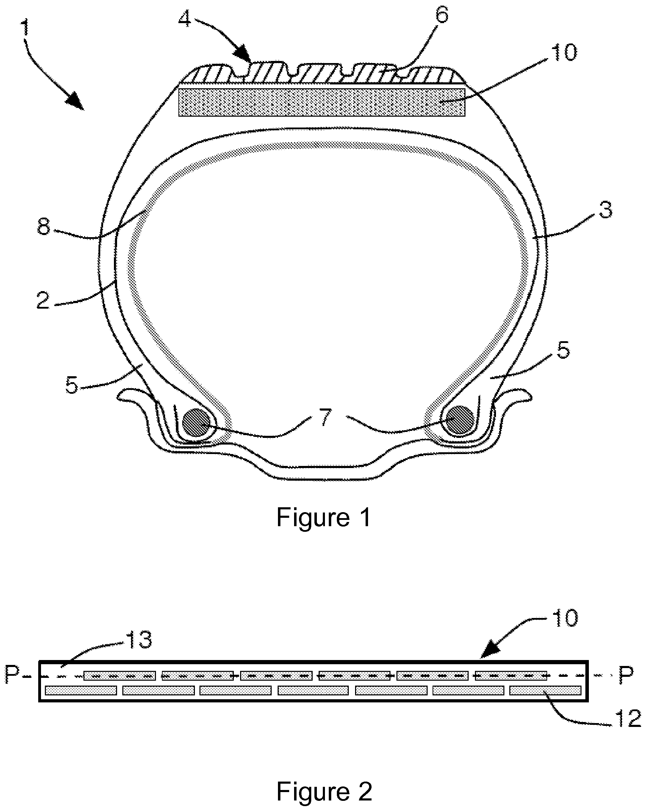

Le stratifié présente un plan médian longitudinal (P) disposé à mi-hauteur du stratifié (la hauteur étant dans la direction radiale du pneumatique), tel que représenté sur la figure 2.

Pour la constitution du stratifié, les couches de composites selon l'invention sont déposées crues ou non polymérisées selon les angles souhaités de stratification et forment une laize.

La laize stratifiée est découpée en bandelette crue ou non polymérisée de largeur souhaitée.

Les bandelettes crues sont trancannées sur un tambour de grand diamètre (ie 2 mètre de diamètre). Les bandelettes sont cuites sous faible pression (0,03 bar relatif) et une température comprise entre 160 et 220°C avec une rampe de montée en température d'au moins 10°C/min, préférentiellement 20°C/min et de manière avantageuse 30°C/min, à l'aide des périphériques de cuisson usuels (tels que tissu d'arrachage, feutre de drainage, film anti-adhésif micro-perforé ou non, film à vide etc.).

Selon un autre mode de réalisation la laize stratifiée est déposée sur un tambour de grand diamètre et cuite sous faible pression (0,03 bar relatif) et une température comprise entre 160 et 220°C avec une rampe de montée en température d'au moins 10°C/min, préférentiellement 20°C/min et de manière avantageuse 30°C/min, à l'aide des périphériques de cuisson usuels. Après cuisson, la laize est découpée en bandelettes.

De préférence, les bandelettes présentent une épaisseur inférieure ou égale à 1 mm, et plus préférentiellement inférieure ou égale à 0,7 mm.

La couche de composite possède de préférence une masse surfacique d'environ 200 g/m$^2$ et une épaisseur avant cuisson d'environ 0,2 mm.

De préférence, la couche de composite a une masse surfacique inférieure ou égale à 80 g/m$^2$ , préférentiellement comprise entre 18 g/m$^2$ et 80 g/m$^2$ , et une épaisseur avant cuisson inférieure à 0,06 mm.

Lorsque ladite couche de composite comprend des fibres en polyéthylène téréphtalate, celles-ci sont avantageusement majoritaires, c'est-à-dire représentent plus de 50 % des fibres d'une même couche. De manière très préférée, les fibres de la couche sont constituées de polyéthylène téréphtalate. Dans cette variante, le ratio volumique composition de résines/fibres de la couche de composite est avantageusement compris entre 25/75 et 55/45, préférentiellement d'environ 45/55.

Selon d'autres variantes de réalisation préférées de l'invention, les fibres de chaque couche de composite comprennent des fibres en polyamide (comme le PA66, PA46, PA6, PA10 semi-aromatique), des fibres en cellulose ou rayonne ou encore des fibres thermoplastiques de bas module, chacun de ces types de de fibres pouvant être utilisées préférentiellement en étant majoritaire, c'est-à-dire représentant plus de 50 % des fibres d'une même couche, et encore plus préférentiellement, chacun de ces types de fibres constituant la totalité des fibres de la couche de composite. Dans ces variantes, le ratio volumique composition de résines/fibres de la couche de composite est avantageusement compris entre 25/75 et 55/45, préférentiellement d'environ 45/55.

Selon une variante de réalisation préférée de l'invention, ladite couche de composite comprend des fibres de verre, De façon préférentielle, les fibres de verre sont majoritaires, c'est-à-dire représente plus de 50 % des fibres d'une même couche. De manière préférée, les fibres de la couche sont constituées de fibres de verre. Dans cette variante, le ratio volumique composition de résines/fibres de la couche de composite est avantageusement compris entre 35/65 et 70/30, et préférentiellement d'environ 45/55.

Quelle que soit la variante de l'invention, les fibres doivent avoir une température de fusion supérieure à 180°C, préférentiellement supérieure à 200°C, très préférentiellement supérieure à 220°C.

Selon une autre variante de réalisation préférée de l'invention, ladite couche de composite comprend des fibres de carbone. De façon préférentielle, les fibres de carbone sont majoritaires, c'est-à-dire représente plus de 50 % des fibres d'une même couche. De manière préférée, les fibres de la couche sont constituées de fibres de carbone. Dans cette variante, le ratio volumique composition de résines/fibres de la couche de composite est avantageusement compris entre 35/65 à 60/40, et préférentiellement d'environ 50/50.

Selon d'autres variantes de réalisation préférées de l'invention, les fibres comprennent des fibres aramide, des fibres de basalte ou des fibres de quartz.

Selon une variante de réalisation préférée de l'invention, les bandelettes sont disposées sur quatre nappes de bandelettes, les bandelettes de chaque nappe de bandelettes recouvrant les bandelettes de la nappe de bandelettes qui lui est radialement intérieure d'au moins 20% et d'au plus 80%.

Selon un mode de réalisation préféré de l'invention, ledit stratifié comprend :

- n couches de composites intérieures ayant des fibres dont l'angle avec la direction circonférentielle est 0°, n étant un nombre supérieur ou égal à 1, de préférence allant de 1 à 20, plus préférentiellement allant de 1 à 12, encore plus préférentiellement de 1 à 6, ces couches de composites intérieures étant juxtaposées les unes aux autres et encadrées de part et d'autre respectivement par m couches de composites extérieures,
- chaque couche de composite extérieure ayant des fibres formant un angle $\alpha$ avec la direction circonférentielle distinct de 0°, m allant de 1 à 8, l'angle $\alpha$ des fibres des couches de composites extérieures successives disposées d'un même côté des couches de composites intérieures étant identique ou différent, et l'angle $\alpha$ des fibres de deux couches de composites extérieures disposées symétriquement de chaque côté des couches de composites intérieures étant identique.

Le nombre total de couches dans le stratifié est donc de n+ 2m.

Selon un mode de réalisation préférentiel de l'invention, n et m sont égaux à 1. Plus préférentiellement l'angle $\alpha$ des fibres des couches composites extérieures est égal à 45° ou à -45°.

Selon un autre mode de réalisation préférentiel de l'invention, n est égal à 1 et m est égal à 2.

Plus préférentiellement l'angle $\alpha$ des fibres des deux couches juxtaposées extérieures est égal à 45° ou à -45°.

Selon un autre mode de réalisation de l'invention, le stratifié comprend :

- n couches de composites intérieures ayant des fibres dont l'angle avec la direction circonférentielle est 0°, n étant un nombre supérieur ou égal à 3, de préférence allant de 3 à 20, plus préférentiellement allant de 3 à 12, encore plus préférentiellement de 3 à 6, ces couches de composites intérieures étant juxtaposées les unes aux autres et encadrées de part et d'autre respectivement par m couches composites extérieures,
- chaque couche de composite extérieure ayant des fibres formant un angle $\alpha$ avec la direction circonférentielle distinct de 0°, m allant de 1 à 8, l'angle $\alpha$ des fibres des couches composites extérieures successives disposées d'un même côté des couches composites intérieures étant identique ou différent, et l'angle $\alpha$ des fibres de deux couches composites extérieures disposées symétriquement de chaque côté des couches composites intérieures étant identique en valeur absolue mais de signe opposé.

Selon un autre mode de réalisation de l'invention, le stratifié comprend au moins deux couches composites, chaque couche composite comprenant des fibres parallèles entre elles et formant un angle $\alpha$ avec la direction circonférentielle, différent de 0°, de sorte que l'angle formé avec la direction circonférentielle par les fibres de l'une des couches composites soit opposé à l'angle formé avec la direction circonférentielle par les fibres de l'autre couche composite, lesdites fibres de chaque couche composite étant enrobées d'une matrice polymérique, ledit stratifié comportant un nombre pair n de couches composites, la somme des angles formés avec la direction circonférentielle par les fibres de toutes les couches composites disposées radialement d'un même côté du plan médian (P) du stratifié est égale en valeur absolue à la somme des angles formés avec la direction circonférentielle par les fibres de toutes les couches composites disposées radialement de l'autre côté du plan médian (P) du stratifié et la somme des angles formés avec la direction circonférentielle par les fibres des n couches composites est égale à 0°. Dans un arrangement préféré de ce mode de réalisation, l'angle $\alpha$ des fibres des couches composites les plus extérieures radialement est égal à 45° ou à -45°.

## Matrice de composition de caoutchouc

La matrice de composition de caoutchouc est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant une zone de sommet conforme à l'invention).

Préférentiellement, cette matrice de composition de caoutchouc a pour caractéristique sa rigidité, c'est-à-dire qu'elle présente un module sécant en extension à 10% d'allongement, appelé module MA10, supérieur ou égal à 10 MPa.

Selon une autre variante de réalisation préférée de l'invention, cette matrice de composition de caoutchouc peut également présenter une très haute rigidité, c'est-à-dire un module MA10 supérieur ou égal à 30 MPa.

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en œuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs connus de l'homme de l'art et habituellement utilisés dans les compositions de caoutchouc destinées à la fabrication de pneumatiques, tels que par exemple des charges renforçantes comme le noir de carbone ou la silice, des agents de couplage, des charges non-renforçantes, des plastifiants (huiles plastifiantes et/ou résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

L'homme de l'art saura, à la lumière de la présente description, ajuster la formulation de la composition de caoutchouc afin d'atteindre les niveaux de propriétés (notamment module MA10) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

L'espace dans la direction radiale (ou épaisseur) entre deux nappes de bandelettes successives occupée par la matrice de composition de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un pneumatique.

Nappes de bandelettes

Dans une nappe de bandelettes, le positionnement des bandelettes en quinconce est réalisé par exemple par un premier trancanage débutant à un azimut donné, et un second trancanage avec un pas identique débutant à 180 degrés. En variante, le positionnement des bandelettes est réalisé par un premier trancanage dans une direction axiale donnée, suivi d'un second trancanage dans la direction axiale opposée.

En variante, les points de départ et d'arrêt des nappes de bandelettes peuvent éventuellement être unifiés afin d'assurer une certaine uniformité.

***Description des figures***

La figure 1 représente un pneumatique 1 selon l'invention, comprenant des flancs 3 surmontés d'un sommet 4 et une carcasse 2 s'étendant d'un bourrelet 5 à l'autre, en passant par les flancs 3 et le sommet 4. Au niveau du sommet 4, plus spécifiquement entre la carcasse 2 et la bande de roulement 6, le pneumatique prévoit une zone de renfort sommet 10 pourvue de bandelettes circonférentielles, c'est-à-dire orientées sensiblement à 0° par rapport à la direction circonférentielle.

La figure 2 illustre un mode de réalisation d'une zone sommet 10 selon l'invention. Dans le mode de réalisation de la figure 2, une pluralité de bandelettes 12 constituent deux nappes de bandelettes, une première nappe de bandelettes radialement à l'intérieur et une deuxième nappe de bandelettes radialement à l'extérieur, les bandelettes de ladite deuxième nappe de bandelettes recouvrant les bandelettes de ladite première nappe de bandelettes d'au moins 20%, lesdites bandelettes 12 desdites première et deuxième nappe de bandelettes étant disposées de manière juxtaposées et avec un angle par rapport à la direction circonférentielle sensiblement proche de 0 degré, et plus largement selon un angle inférieur à sensiblement 12 degrés de la direction circonférentielle. Chacune de ces nappes de bandelettes est noyée dans une matrice de composition de caoutchouc 13 qui présente, à l'état réticulé, un module sécant en extension à 10% d'allongement supérieur ou égal à 10MPa.

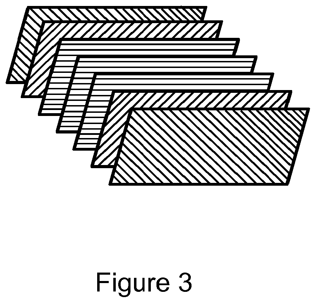

La figure 3 illustre un mode de réalisation dans lequel n est égale à 3 et m est égal à 2.

Ainsi, sans que cela soit limitatif, l'invention a pour objet au moins l'une des réalisations suivantes :

1. Une composition de résines fonctionnalisées époxyde comprenant au moins :

- une première résine novolaque fonctionnalisée époxyde à base :

  - d'au moins un premier polyphénol aromatique comprenant au moins un noyau aromatique porteur d'au moins deux fonctions hydroxyles en position méta l'une par rapport à l'autre, les deux positions ortho d'au moins une des fonctions hydroxyles étant non substituées, et
  - d'un composé comprenant au moins une fonction aldéhyde ;

- une deuxième résine novolaque fonctionnalisée époxyde à base :

  - d'au moins un deuxième polyphénol aromatique comprenant au moins un noyau aromatique porteur d'au moins un radical alkyle et d'au moins deux fonctions hydroxyles en position méta l'une par rapport à l'autre, les deux positions ortho d'au moins une des fonctions hydroxyles étant non substituées, et
  - d'un composé comprenant au moins une fonction aldéhyde ;

- et un agent durcisseur choisi parmi les agents durcisseurs aminés ou phénoliques ;
  la masse molaire moyenne du groupe constitué par l'ensemble des résines novolaques époxydées de ladite composition étant comprise entre 550 et 650 g/mol, la fonctionnalité époxyde moyenne dudit groupe étant comprise entre 3 et 3,5 eq.époxyde/mol, ladite composition présentant une température de transition vitreuse $T_g$ d'au moins 160°C.

2. Une composition de résines selon la réalisation précédente dans laquelle ledit premier polyphénol aromatique comprend au moins un noyau aromatique porteur de trois fonctions hydroxyles en position méta les unes par rapport aux autres.

3. Une composition de résines selon l'une quelconque des réalisations précédentes dans laquelle ledit premier polyphénol aromatique comprend un noyau aromatique porteur uniquement de groupes hydroxyles.

4. Une composition selon la réalisation précédente dans laquelle ledit premier polyphénol aromatique est choisi dans le groupe constitué par le 1,3-benzènediol, communément appelé résorcinol, et le 1,3,5-benzènetriol, communément appelé phloroglucinol.

5. Une composition de résines selon l'une quelconque des réalisations précédentes dans laquelle ledit deuxième polyphénol aromatique comprend un noyau aromatique porteur d'un radical alkyle comprenant de 1 à 5 atomes de carbone.

6. Une composition de résines selon l'une quelconque des réalisations précédentes dans laquelle le composé comprenant au moins une fonction aldéhyde comprend, indépendamment pour ladite première résine novolaque et ladite deuxième résine novolaque, un noyau aromatique porteur d'au moins une fonction aldéhyde.

7. Une composition selon la réalisation précédente dans laquelle ledit noyau aromatique est également porteur d'un radical carbonylaklyle et/ou hydroxylalkyle.

8. Une composition selon l'une quelconque des réalisations 6 à 7 dans laquelle ledit noyau aromatique est porteur de deux fonctions aldéhydes.

9. Une composition selon l'une quelconque des réalisations 6 à 7 dans laquelle ledit noyau aromatique est porteur d'une fonction hydroxyle et d'une fonction carbonyle.

10. Une composition selon l'une quelconque des réalisations précédentes dans laquelle le rapport molaire de ladite deuxième résine novolaque fonctionnalisée époxyde sur ladite première résine novolaque fonctionnalisée époxyde est compris entre 1:4 et 1:1.

11. Une composition selon l'une quelconque des réalisations précédentes comprenant entre 0,1 et 1,5 pcr (parties en poids pour cent parties de résines époxydes novolaques) d'une charge renforçante, élastomérique ou thermoplastique.

12. Une composition selon l'une quelconque des réalisations précédentes dans laquelle ledit agent durcisseur aminé comprend au moins deux fonctions amines primaires situées sur au moins un cycle aromatique à six atomes, ledit au moins un cycle aromatique à six atomes comportant :

- au moins une fonction amine primaire, et
- au moins deux radicaux Ri, identiques ou différents, choisis dans le groupe constitué par les radicaux alkyles linéaires ou ramifiés en $C_1$-$C_6$, les halogènes, et les éthers, les cétones et les esters substitués par des radicaux alkyles linéaires ou ramifiés en $C_1$-$C_6$,

de telle sorte que l'au moins un cycle aromatique à six atomes ne comprenne pas d'atome d'hydrogène situé en position ortho par rapport aux fonctions amines primaires, ledit durcisseur aminé comprenant au moins une deuxième fonction amine primaire située sur ledit au moins un cycle aromatique à six atomes ou sur un éventuel second cycle aromatique à six atomes dudit durcisseur aminé.

13. Une composition selon la réalisation précédente dans laquelle ledit agent durcisseur aminé comprend de 1 à 3 cycles aromatiques à six atomes.

14. Une composition selon l'une quelconque des réalisations 1 à 13 dans laquelle ledit agent durcisseur aminé comprend de 2 à 4 fonctions amines primaires situées sur au moins un cycle aromatique à six atome du durcisseur aminé.

15. Une composition selon l'une quelconque des réalisations 1 à 14 dans laquelle les halogènes susceptibles de constituer les radicaux $R_i$ sont choisis dans le groupe constitué par les atomes de fluor, de chlore, de brome et d'iode.

16. Une composition selon l'une quelconque des réalisations 1 à 15 dans laquelle la quantité d'agent durcisseur est ajustée de manière à ce qu'il y ait 2 équivalents molaires époxyde par fonction amine.

17. Une composition selon l'une quelconque des réalisations 1 à 11 dans laquelle ledit agent durcisseur phénolique comprend au moins deux fonctions hydroxyles situées sur au moins un cycle aromatique à six atomes de carbone, au moins une position ortho de chacune desdites fonctions hydroxyles étant non substituée.

18. Une composition selon la réalisation précédente dans laquelle ledit agent durcisseur phénolique comprend un ou deux cycles aromatiques à six atomes de carbone.

19. Une composition selon l'une quelconque des réalisations 17 à 18 dans laquelle ledit agent durcisseur phénolique comprend au moins trois fonctions hydroxyles.

20. Une composition selon l'une quelconque des réalisations 17 à 19 dans lequel la quantité d'agent durcisseur est ajustée de manière à ce qu'il y ait entre 0,5 et 1,5 équivalent molaire époxyde par fonction hydroxyle.

21. Un composite comprenant une composition selon l'une quelconque des réalisations 1 à 20 et au moins une fibre.

22. Un composite selon la réalisation précédente dans lequel ladite fibre est réalisée en un matériau choisi parmi les matériaux organiques ou inorganiques.

23. Un composite selon l'une quelconque des réalisations 21 à 22 dans lequel ladite fibre est réalisée en un matériau choisi parmi les polyamides aliphatiques, les polyesters, les polyamides aromatiques, la cellulose, naturelle, la rayonne, le verre le quartz, le basalte ou le carbone.

24. Un article semi fini comprenant un composite selon l'une quelconque des réalisations 21 à 23 enrobé d'une matrice de composition de caoutchouc.

25. Un pneumatique comprenant une composition selon l'une des réalisations 1 à 20 ou un composite selon l'une des réalisations 21 à 23 ou un article semi-fini selon la réalisation 24.

26. Un pneumatique comprenant une nappe carcasse reliant deux bourrelets par l'intermédiaire de deux flancs, ladite nappe carcasse étant surmontée radialement vers l'extérieur du pneumatique par une zone de renfort de sommet et elle-même surmontée radialement vers l'extérieur du pneumatique par une bande de roulement, la zone de renfort de sommet comprenant une pluralité de bandelettes de renfort disposées sur au moins deux nappes de bandelettes, une première nappe de bandelettes radialement à l'intérieur et une deuxième nappe de bandelettes radialement à l'extérieur, les bandelettes de ladite deuxième nappe de bandelettes recouvrant les bandelettes de ladite première nappe de bandelettes d'au moins 20%, lesdites bandelettes desdites première et deuxième nappe de bandelettes étant disposées de manière juxtaposées et avec un angle compris entre 0 et 10° par rapport à la direction circonférentielle, chaque nappe de bandelettes étant noyée dans une matrice de composition de caoutchouc qui présente, à l'état réticulé, un module sécant en extension à 10% d'allongement supérieur à 10 MPa, caractérisé en ce que les bandelettes de renfort sont constituées par un stratifié d'au moins 2 couches de composites selon l'une quelconque des réalisations 21 à 23, enrobées d'une matrice polymérique.

27. Un pneumatique selon la réalisation 26 dans lequel ledit stratifié comprend :

- n couches de composites selon l'une quelconque des réalisations 21 à 23, dites couches intérieures, ayant des fibres parallèles entre elles dont l'angle avec la direction circonférentielle est 0°, n étant un nombre supérieur ou égal à 1, ces couches intérieures étant juxtaposées les unes aux autres et encadrées de part et d'autre respectivement par m couches de composites selon l'une quelconque des réalisations 21 à 23, dites couches extérieures,
- chaque couche extérieure ayant des fibres parallèles entre elles formant un angle $\alpha$ avec la direction circonférentielle distinct de 0°, m allant de 1 à 8, l'angle $\alpha$ des fibres des couches extérieures successives disposées d'un même côté des couches intérieures étant identique ou différent, et l'angle $\alpha$ des fibres de deux couches extérieures disposées symétriquement de chaque côté des couches intérieures étant identique.

28. Un pneumatique selon la réalisation précédente dans lequel le nombre n va de 1 à 20.

29. Un pneumatique selon la réalisation 26 dans laquelle ledit stratifié comprend :

- n couches de composites selon l'une quelconque des réalisations 21 à 23, dites couches intérieures, ayant des fibres parallèles entre elles dont l'angle avec la direction circonférentielle est 0°, n étant un nombre supérieur ou égal à 3, ces couches intérieures étant juxtaposées les unes aux autres et encadrées de part et d'autre respectivement par m couches de composites selon l'une quelconque des réalisations 21 à 23, dites couches extérieures,
- chaque couche extérieure ayant des fibres parallèles entre elles formant un angle $\alpha$ avec la direction circonférentielle distinct de 0°, m allant de 1 à 8, l'angle $\alpha$ des fibres des couches extérieures successives disposées d'un même côté des couches intérieures étant identique ou différent, et l'angle $\alpha$ des fibres de deux couches extérieures disposées symétriquement de chaque côté des couches intérieures étant identique en valeur absolue mais de signe opposé.

30. Un pneumatique selon la réalisation précédente dans laquelle le nombre n va de 3 à 20.

31. Un pneumatique selon la réalisation 26 dans lequel ledit stratifié comprend au moins deux couches composites, chaque couche composite comprenant des fibres parallèles entre elles et formant un angle $\alpha$ avec la direction circonférentielle, différent de 0°, de sorte que l'angle formé avec la direction circonférentielle par les fibres de l'une des couches composites soit opposé à l'angle formé avec la direction circonférentielle par les fibres de l'autre couche composite, lesdites fibres de chaque couche composite étant enrobées d'une matrice polymérique, ledit stratifié comportant un nombre pair n de couches composites, la somme des angles formés avec la direction circonférentielle par les fibres de toutes les couches composites disposées radialement d'un même côté du plan médian (P) du stratifié est égale en valeur absolue à la somme des angles formés avec la direction circonférentielle par les fibres de toutes les couches composites disposées radialement de l'autre côté du plan médian (P) du stratifié et la somme des angles formés avec la direction circonférentielle par les fibres des n couches composites est égale à 0°.

*Méthodes de mesures*

La température de transition vitreuse Tg est mesurée de manière connue par calorimétrie différentielle, ou DSC (Differential Scanning Calorimetry), par exemple et sauf indications différentes spécifiées, selon la norme ISO 11357-2 de 2014.

La viscosité de la composition de résines selon l'invention à l'état cru est mesurée à 65°C dans un rhéomètre plan-plan Anton Paar MCR301 sur un film de composition de résines d'une épaisseur comprise entre 1,2 et 1,4 mm déposé sur un disque de 20 mm de diamètre et soumis à une contrainte de cisaillement de 1 Pa et une fréquence de sollicitation de 1 Hz.

Les propriétés de contrainte à la rupture en flexion, de déformation en flexion à rupture et de module en flexion sont mesurées conformément à la norme ISO 14125 :1998-06.

De manière bien connue de l'Homme du métier, la macrostructure (masse molaire moyenne en masse, en nombre et indice de polydispersité, respectivement notés Mw, Mn et Ip) est déterminée par chromatographie d'exclusion stérique (SEC) selon la norme ISO 16014, comme indiqué ci-après.

Pour rappel, l'analyse SEC consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane, à une concentration de 1 g/litre. Puis la solution est filtrée sur un filtre de porosité 0,45 $\mu$m, avant injection dans l'appareillage. L'appareillage utilisé est par exemple une chaîne chromatographique "Waters alliance" selon les conditions suivantes :

- solvant d'élution : le tétrahydrofurane,
- température 35°C ;
- concentration 1 g/litre ;
- débit :1 ml/min ;
- volume injecté : 100 $\mu$1 ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) Mw, Mn, ainsi que Ip = Mw/Mn.

Toutes les valeurs de masses molaires indiquées dans la présente demande sont donc relatives à des courbes d'étalonnages réalisées avec des étalons de polystyrène.

Dans le cas d'un coupage de résines, la masse molaire moyenne du coupage est calculée par moyenne pondérée par la masse des masses molaires de chaque résine. Ainsi, un coupage d'une masse $m_1$ de résine 1 de masse molaire $M_1$ et d'une masse $m_2$ de résine 2 de masse molaire $M_2$ aura pour masse molaire moyenne la valeur $(m_1M_1+m_2M_2)/(m_1+m_2)$.

Les exemples qui suivent permettent d'illustrer l'invention sans la limiter.

**Exemples**

*Préparation des compositions*

On procède pour les essais qui suivent de la manière suivante : on introduit dans une cuve dont la température est maintenue à 90°C, équipée d'un agitateur magnétique, les résines époxydes en commençant par la résine la plus fluide en agitant jusqu'à homogénéisation. Le durcisseur est ensuite introduit en maintenant la température jusqu'à solubilisation totale de ce dernier. On maintient l'agitation et la température pendant 10 min après la solubilisation. L'ensemble est ensuite refroidi à température ambiante. Les compositions sont utilisées pour les mesures de $T_g$ et de viscosité.

*Préparation des éprouvettes*

Sept couches de tissus de verre de grade E avec un grammage de 300 g/m$^2$ et une armure taffetas (avec des fibres à 0 et 90°), revêtues avec un ensimage dédié époxyde, sont empilées dans un moule. Ces tissus sont commercialisés par la société Hexcel Composites. Les couches sont empilées de manière à ce que les fibres de chaque couche soient parallèles.

La composition préparée de la manière précédemment décrite est imprégnée à une température de 80°C en chauffant le moule contenant les tissus. Une fois l'imprégnation réalisée, le matériau composite est cuit dans le moule fermé, à une pression relative de 2600 Pa (0,026 bar relatif), successivement à 180°C pendant 1h30, puis à 200°C pendant 1h30. Le moule est ensuite refroidi à température ambiante avant démoulage.

Des éprouvettes normalisées sont découpées à partir des plaques de composites, chaque éprouvette ayant une longueur de 80 mm, une largeur de 15 mm et une épaisseur de 2 mm (à plus ou moins 10%). Chaque composite comprend 60% poids de fibres et 40% poids de composition de résine (à plus ou moins 1%).

Les éprouvettes sont utilisées pour mesurer les propriétés de contrainte à la rupture en flexion, de déformation en flexion à rupture et de module en flexion. Le module en flexion est déterminé pour une déformation en flexion de 0,05%, telle que définie dans la norme ISO 14125:1998-06.

*Exemple 1 - Comparaison C-1, C-2 et T-1*

*On compare dans cet exemple une composition de résines conforme à l'invention avec une composition de résine novolaque phénol ayant une masse molaire et une fonctionnalité époxyde moyenne proche.*

Les compositions de résines C-1 et C-2, conformes à l'invention, à base d'un coupage d'une résine époxyde novolaque phénol et d'une résine époxyde novolaque crésol, sont comparées à une composition comprenant pour seule résine une résine novolaque phénol commerciale T-1 commercialisée par la société Huntsman, présentant une masse molaire et une fonctionnalité époxyde moyenne proche.

Les compositions et éprouvettes sont préparées comme indiqué précédemment. Les viscosités sont mesurées immédiatement après préparation des compositions et refroidissement à 65°C, et après 5 jours de conservation à température ambiante et réchauffage à 65°C pour les besoins de la mesure.

Les compositions et résultats de mesures sont indiqués dans le Tableau 1.

**Tableau 1 - Comparaison de compositions à base d'une résine phénol et d'un coupage de résines**

| | T-1<br>Non conforme | C-1<br>Conforme | C-2<br>Conforme |
|---|---|---|---|
| | Composition molaire | | |
| Résine époxyde novolaque phénol (1) | 100% | | |
| Résine époxyde novolaque phénol (2) | | 66,7% | 66,7% |
| Résine époxyde novolaque crésol (3) | | 33,3% | 33,3% |
| Durcisseur (4), en équivalent molaire époxyde par fonction amine | 2 | 2 | 2 |
| Charge thermoplastique (5) | | | 0,5 pcr |
| Masse molaire (g/mol) | 642 | 650 | 650 |
| Fonctionnalité époxyde moyenne (eq. époxyde/mol) | 3,6 | 3,3 | 3,3 |
| Viscosité à 65°C (Pa.s) à $t_0$ | 11,8 | 2,9 | 3,5 |
| Viscosité à 65°C (Pa.s) à 5j | - | 6,1 | 8,5 |
| Allongement à rupture (%) | 3,16 | 2,93 | 3,07 |
| Module en flexion à 0,05% (MPa) | 18412 | 17676 | 17869 |

(suite)

|  | T-1 Non conforme | C-1 Conforme | C-2 Conforme |
|---|---|---|---|
|  | Composition molaire | | |
| $T_g$ (°C) | 189 | 172 | 164 |
| (1) EPN 1138 - fournisseur Huntsman<br>(2) Epikote 893 - Epoxy novolaque n°CAS 9003-36-5 - fournisseur Momentive<br>(3) ECN 1273 - Epoxy novolaque Araldite n°CAS 29690-82-2 - fournisseur Huntsman<br>(4) MDEA - 4,4'-methylenebis(2,6-diethylaniline) - fournisseur Lonza<br>(5) Microbilles thermoplastiques PA12 commercialisées par Arkema | | | |

L'imprégnation des couches de tissus avec la composition à base de résine époxyde phénol novolaque T-1 se révèle très difficile du fait d'une viscosité à $t_0$ élevée, imposant une imprégnation lente (ou à plus haute température, ce qui augmenterait la vitesse de réticulation) et un examen attentif pour vérifier l'homogénéité de la répartition de la composition de résine. L'imprégnation se révèle impossible au bout de 24 h car la viscosité a trop augmenté. Ainsi, bien que présentant une masse molaire et une fonctionnalité époxyde moyennes proches, la composition à base d'une résine époxyde novolaque phénol seule ne permet pas d'obtenir les propriétés requises à la fois à cru et après réticulation.

Les compositions conformes C-1 et C-2 imprègnent facilement le tissu des éprouvettes, même au bout de 5 jours, tout en étant suffisamment visqueuses pour enrober correctement les fibres.

Les éprouvettes présentent des caractéristiques d'allongement à rupture, de module en flexion et de température de transition vitreuse conformes aux attentes.

On note, en comparant C-1 et C-2, que l'ajout d'une charge thermoplastique permet d'augmenter légèrement l'allongement à rupture et la viscosité de la composition crue, c'est-à-dire avant polymérisation, mais au détriment de la température de transition vitreuse, qui reste cependant satisfaisante.

On compare Tableau 2 une composition conforme C-1 constituée à partir d'un coupage de deux résines, ces résines étant utilisées isolément pour constituer les compositions T-1 et T-2. On voit que la viscosité d'une composition à base d'un coupage de résines ne peut être déduite des viscosités des compositions à base des résines isolées rendant difficile la formulation d'une composition à partir des propriétés des résines prises isolément.

**Tableau 2**

|  | C-1 Conforme | T-2 Non conforme | T-3 Non conforme |
|---|---|---|---|
| Résine époxyde novolaque phénol (2) | 66,7% | 100% |  |
| Résine époxyde novolaque crésol (3) | 33,3% |  | 100% |
| Durcisseur (4), en équivalent molaire époxyde par fonction amine | 2 | 2 | 2 |
| Masse molaire (g/mol) | 650 | 435 | 1080 |
| Fonctionnalité époxyde moyenne (eq.époxyde/mol) | 3,3 | 2,5 | 4,8 |
| Viscosité à 65°C (Pa.s) à $t_0$ | 2,9 | 0,5 | 170,8 |
| (2) Epikote 893 - Epoxy novolaque n°CAS 9003-36-5 - fournisseur Momentive<br>(3) ECN 1273 - Epoxy novolaque Araldite n°CAS 29690-82-2 - fournisseur Huntsman<br>(4) MDEA - 4,4'-methylenebis(2,6-diethylaniline) - fournisseur Lonza | | | |

### Exemple 2 - Comparaison T-4 et T-5

*Cet exemple montre que les propriétés d'un mélange de résines ne peuvent être déduites des propriétés des constituants du mélange pris séparément. Il montre également qu'une composition à base d'un coupage de résines présente des propriétés différentes d'une composition à base d'une résine crésol de masse molaire et de fonctionnalités époxydes moyennes proches.*

On prépare, comme indiqué précédemment, une formulation de résines présentant une masse molaire et une fonctionnalité époxyde proche d'une résine époxyde crésol novolaque commerciale T-4.

Cette formulation est à base d'un coupage d'une résine époxyde phénol novolaque et d'une résine époxyde crésol novolaque. Les compositions sont indiquées dans le Tableau 3.

**Tableau 3 - Comparaison de compositions à base d'une résine crésol et d'un coupage de résines**

| | T-4 Non conforme | T-5 Non conforme |
|---|---|---|
| | Composition molaire | |
| Résine époxyde novolaque crésol (1) | 100% | |
| Résine époxyde novolaque crésol (2) | | 16,7% |
| Résine époxyde novolaque phénol (3) | | 83,3% |
| Durcisseur (4), en équivalent molaire époxyde par fonction amine | 2 | 2 |
| Masse molaire (g/mol) | 540 | 543 |
| Fonctionnalité époxyde moyenne | 2,7 | 2,9 |
| Viscosité à 65°C (Pa.s) à $t_0$ | 2,4 | 1,1 |
| Viscosité à 65°C (Pa.s) à 5j | 2,5 | 2,4 |
| Allongement à rupture (%) | 2,87 | 2,98 |
| Module en flexion à 0,05% (MPa) | 19133 | 19528 |
| $T_g$ (°C) | 151 | 156 |
| (1) ECN 9511 - fournisseur Huntsman<br>(2) ECN 1273 - Epoxy novolaque Araldite n°CAS 29690-82-2 - fournisseur Ciba<br>(3) Epikote 893 - Epoxy novolaque n°CAS 9003-36-5 - fournisseur Momentive<br>(4) MDEA - 4,4'-methylenebis(2,6-diethylaniline) - fournisseur Lonza | | |

Bien que ces deux formulations présentent des masses molaires et des fonctionnalités époxyde moyennes proches, on observe des différences notables entre leurs viscosités à $t_0$ ainsi que sur l'évolution de cette viscosité dans le temps. Cet exemple montre que le comportement d'un coupage de résines époxyde novolaques crésol et phénol a un comportement différent d'une résine époxyde novolaque crésol seule.

Bien que la composition T-5 soit un coupage de résines époxyde novolaque crésol et phénol, sa masse molaire et sa fonctionnalité époxyde moyenne sont trop faibles. Le rapport molaire résine époxyde novolaque phénol sur résine époxyde novolaque crésol est égal à 5. On n'observe que la température de transition vitreuse mesurée sur le composite est en deçà des valeurs visées pour une bonne mise en œuvre des compositions de résines selon l'invention.

**Revendications**

1. Composition de résines fonctionnalisées époxyde comprenant au moins :

- une première résine novolaque fonctionnalisée époxyde à base :

- d'au moins un premier polyphénol aromatique comprenant au moins un noyau aromatique porteur d'au moins deux fonctions hydroxyles en position méta l'une par rapport à l'autre, les deux positions ortho d'au moins une des fonctions hydroxyles étant non substituées, et
- d'un composé comprenant au moins une fonction aldéhyde ;

- une deuxième résine novolaque fonctionnalisée époxyde à base :

- d'au moins un deuxième polyphénol aromatique comprenant au moins un noyau aromatique porteur d'au moins un radical alkyle et d'au moins deux fonctions hydroxyles en position méta l'une par rapport à l'autre, les deux positions ortho d'au moins une des fonctions hydroxyles étant non substituées, et
- d'un composé comprenant au moins une fonction aldéhyde ;

- et un agent durcisseur choisi parmi les agents durcisseurs aminés ou phénoliques ;

la masse molaire moyenne du groupe constitué par l'ensemble des résines novolaques époxydées de ladite composition étant comprise entre 550 et 650 g/mol, déterminée comme indiqué dans la description, la fonctionnalité époxyde moyenne dudit groupe étant comprise entre 3 et 3,5 eq.époxyde/mol, ladite composition présentant une température de transition vitreuse $T_g$ d'au moins 160°C, mesurée comme indiqué dans la description.

2. Composition de résines selon la revendication précédente dans laquelle ledit premier polyphénol aromatique comprend au moins un noyau aromatique porteur de trois fonctions hydroxyles en position méta les unes par rapport aux autres.

3. Composition de résines selon l'une quelconque des revendications précédentes dans laquelle ledit premier polyphénol aromatique comprend un noyau aromatique porteur uniquement de groupes hydroxyles.

4. Composition selon la revendication précédente dans laquelle ledit premier polyphénol aromatique est choisi dans le groupe constitué par le 1,3-benzènediol, communément appelé résorcinol, et le 1,3,5-benzènetriol, communément appelé phloroglucinol.

5. Composition de résines selon l'une quelconque des revendications précédentes dans laquelle ledit deuxième polyphénol aromatique comprend un noyau aromatique porteur d'un radical alkyle comprenant de 1 à 5 atomes de carbone.

6. Composition de résines selon l'une quelconque des revendications précédentes dans laquelle le composé comprenant au moins une fonction aldéhyde comprend, indépendamment pour ladite première résine novolaque et ladite deuxième résine novolaque, un noyau aromatique porteur d'au moins une fonction aldéhyde.

7. Composition selon la revendication précédente dans laquelle ledit noyau aromatique est également porteur d'un radical carbonylaklyle et/ou hydroxylalkyle.

8. Composition selon l'une quelconque des revendications précédentes dans laquelle le rapport molaire de ladite deuxième résine novolaque fonctionnalisée époxyde sur ladite première résine novolaque fonctionnalisée époxyde est compris entre 1:4 et 1:1.

9. Composition selon l'une quelconque des revendications précédentes comprenant entre 0,1 et 1,5 pcr (parties en poids pour cent parties de résines époxydes novolaques) d'une charge renforçante, élastomérique ou thermoplastique.

10. Composition selon l'une quelconque des revendications précédentes dans laquelle ledit agent durcisseur aminé comprend au moins deux fonctions amines primaires situées sur au moins un cycle aromatique à six atomes, ledit au moins un cycle aromatique à six atomes comportant :

   - au moins une fonction amine primaire, et
   - au moins deux radicaux Ri, identiques ou différents, choisis dans le groupe constitué par les radicaux alkyles linéaires ou ramifiés en $C_1$-$C_6$, les halogènes, et les éthers, les cétones et les esters substitués par des radicaux alkyles linéaires ou ramifiés en $C_1$-$C_6$,

de telle sorte que l'au moins un cycle aromatique à six atomes ne comprenne pas d'atome d'hydrogène situé en position ortho par rapport aux fonctions amines primaires, ledit durcisseur aminé comprenant au moins une deuxième fonction amine primaire située sur ledit au moins un cycle aromatique à six atomes ou sur un éventuel second cycle aromatique à six atomes dudit durcisseur aminé.

11. Composition selon l'une quelconque des revendications précédentes dans laquelle la quantité d'agent durcisseur est ajustée de manière à ce qu'il y ait 2 équivalents molaires époxyde par fonction amine.

12. Composition selon l'une quelconque des revendications 1 à 9 dans laquelle ledit agent durcisseur phénolique comprend au moins deux fonctions hydroxyles situées sur au moins un cycle aromatique à six atomes de carbone, au moins une position ortho de chacune desdites fonctions hydroxyles étant non substituée.

13. Composite comprenant une composition selon l'une quelconque des revendications 1 à 12 et au moins une fibre.

14. Article semi fini comprenant un composite selon la revendication 13 enrobé d'une matrice de composition de caoutchouc.

15. Pneumatique comprenant une composition selon l'une des revendications 1 à 12 ou un composite selon la revendication 13 ou un article semi-fini selon la revendication 14.

**Patentansprüche**

1. Zusammensetzung von epoxidfunktionalisierten Harzen, die mindestens Folgendes umfasst:

   - ein erstes epoxidfunktionalisiertes Novolakharz auf Basis von:

     - mindestens einem ersten aromatischen Polyphenol mit mindestens einem aromatischen Kern, der mindestens zwei Hydroxylfunktionen in meta-Position zueinander trägt, wobei die beiden ortho-Positionen zu mindestens einer der Hydroxylfunktionen unsubstituiert sind, und
     - einer Verbindung mit mindestens einer Aldehydfunktion;

   - ein zweites epoxidfunktionalisiertes Novolakharz auf Basis von:

     - mindestens einem zweiten aromatischen Polyphenol mit mindestens einem aromatischen Kern, der mindestens einen Alkylrest und mindestens zwei Hydroxylfunktionen in meta-Position zueinander trägt, wobei die beiden ortho-Positionen zu mindestens einer der Hydroxylfunktionen unsubstituiert sind, und
     - einer Verbindung mit mindestens einer Aldehydfunktion;

   - und ein Härtungsmittel, das aus Amin-Härtungsmitteln oder phenolischen Härtungsmitteln ausgewählt ist; wobei die gemäß den Angaben in der Beschreibung bestimmte mittlere Molmasse der Gruppe, die aus der Gesamtheit der epoxidierten Novolakharze der Zusammensetzung aufgebaut ist, zwischen 550 und 650 g/mol beträgt, wobei die mittlere Epoxidfunktionalität der Gruppe zwischen 3 und 3,5 Äq. Epoxid/mol liegt, wobei die Zusammensetzung eine gemäß den Angaben in der Beschreibung gemessene Glasübergangstemperatur $T_g$ von mindestens 160 °C aufweist.

2. Harzzusammensetzung nach dem vorhergehenden Anspruch, wobei das erste aromatische Polyphenol mindestens einen aromatischen Kern, der drei Hydroxylfunktionen in meta-Position zueinander trägt, umfasst.

3. Harzzusammensetzung nach einem der vorhergehenden Ansprüche, wobei das erste aromatische Polyphenol einen aromatischen Kern, der nur Hydroxylgruppen trägt, umfasst.

4. Zusammensetzung nach dem vorhergehenden Anspruch, wobei das erste aromatische Polyphenol aus der Gruppe bestehend aus 1,3-Benzoldiol, das gemeinhin als Resorcinol bezeichnet wird, und 1,3,5-Benzoltriol, das gemeinhin als Phloroglucinol bezeichnet wird, ausgewählt ist.

5. Harzzusammensetzung nach einem der vorhergehenden Ansprüche, wobei das zweite aromatische Polyphenol einen aromatischen Kern, der einen Alkylrest mit 1 bis 5 Kohlenstoffatomen trägt, umfasst.

6. Harzzusammensetzung nach einem der vorhergehenden Ansprüche, wobei die Verbindung mit mindestens einer Aldehydfunktion unabhängig für das erste Novolakharz und das zweite Novolakharz einen aromatischen Kern, der mindestens eine Aldehydfunktion trägt, umfasst.

7. Zusammensetzung nach dem vorhergehenden Anspruch, wobei der aromatische Kern außerdem einen Carbonylalkyl- und/oder Hydroxyalkylrest trägt.

8. Zusammensetzung nach einem der vorhergehenden Ansprüche, wobei das Molverhältnis von zweitem epoxidfunktionalisiertem Novolakharz zu erstem epoxidfunktionalisiertem Novolakharz zwischen 1:4 und 1:1 liegt.

9. Zusammensetzung nach einem der vorhergehenden Ansprüche, umfassend zwischen 0,1 und 1,5 phr (Gewichtsteile pro hundert Gewichtsteile Novolakepoxidharze) eines verstärkenden, elastomeren oder thermoplastischen Füllstoffs.

10. Zusammensetzung nach einem der vorhergehenden Ansprüche, wobei das Amin-Härtungsmittel mindesens zwei primäre Aminfunktionen aufweist, die sich an mindestens einem sechsatomigen aromatischen Ring befinden, wobei der mindestens eine sechsatomige aromatische Ring

- mindestens eine primäre Aminfunktion und
- mindestens zwei Reste Ri, die gleich oder verschieden sind und aus der Gruppe bestehend aus linearen oder verzweigten $C_1$-$C_6$-Alkylresten, Halogenen, Ethern, Ketonen und Estern, die durch lineare oder verzweigte $C_1$-$C_6$-Alkylreste substituiert sind, ausgewählt sind,

derart umfasst, dass der mindestens eine sechsatomige aromatische Ring kein Wasserstoffatom in ortho-Position zu den primären Aminfunktionen umfasst, wobei der Amin-Härter mindestens eine zweite primäre Aminfunktion umfasst, die sich an dem mindestens einen sechsatomigen aromatischen Ring oder an einem eventuellen zweiten sechsatomigen aromatischen Ring des Amin-Härters befindet.

11. Zusammensetzung nach einem der vorhergehenden Ansprüche, wobei die Härtungsmittelmenge so eingestellt ist, dass pro Aminfunktion 2 Moläquivalente Epoxid vorliegen.

12. Zusammensetzung nach einem der Ansprüche 1 bis 9, wobei das phenolische Härtungsmittel mindestens zwei Hydroxylfunktionen umfasst, die sich an mindestens einem aromatischen Ring mit sechs Kohlenstoffatomen befinden, wobei mindestens eine ortho-Position zu jeder der Hydroxylfunktionen unsubstituiert ist.

13. Verbund, umfassend eine Zusammensetzung nach einem der Ansprüche 1 bis 12 und mindestens eine Faser.

14. Halbzeug, umfassend einen Verbund nach Anspruch 13, der mit einer Kautschukzusammensetzungsmatrix beschichtet ist.

15. Reifen, umfassend eine Zusammensetzung nach einem der Ansprüche 1 bis 12 oder einen Verbund nach Anspruch 13 oder ein Halbzeug nach Anspruch 14.

**Claims**

1. Composition of epoxide-functionalized resins, comprising at least:

- a first epoxide-functionalized novolac resin based:

- on at least one first aromatic polyphenol comprising at least one aromatic nucleus bearing at least two hydroxyl functions in the meta position relative to one another, the two positions ortho to at least one of the hydroxyl functions being unsubstituted, and
- on a compound comprising at least one aldehyde function;

- a second epoxide-functionalized novolac resin based:

- on at least one second aromatic polyphenol comprising at least one aromatic nucleus bearing at least one alkyl radical and at least two hydroxyl functions in the meta position relative to one another, the two positions ortho to at least one of the hydroxyl functions being unsubstituted, and
- on a compound comprising at least one aldehyde function;

- and a curing agent selected from phenolic or amine-type curing agents;

the average molar mass of the group consisting of the entirety of the epoxidized novolac resins in the said composition being between 550 and 650 g/mol, measured as described in the description, the average epoxide functionality of the said group being between 3 and 3.5 eq epoxide/mol, and the said composition having a glass transition temperature $T_g$ of at least 160°C, measured as described in the description.

2. Resin composition according to the preceding claim, in which the said first aromatic polyphenol comprises at least one aromatic nucleus bearing three hydroxyl functions in the meta position relative to one another.

3. Resin composition according to either of the preceding claims, in which the said first aromatic polyphenol comprises an aromatic nucleus bearing only hydroxyl groups.

4. Composition according to the preceding claim, in which the said first aromatic polyphenol is selected from the group consisting of 1,3-benzenediol, commonly called resorcinol, and 1,3,5-benzenetriol, commonly called phloroglucinol.

5. Resin composition according to any one of the preceding claims, in which the said second aromatic polyphenol comprises an aromatic nucleus bearing an alkyl radical comprising from 1 to 5 carbon atoms.

6. Resin composition according to any one of the preceding claims, in which the compound comprising at least one aldehyde function comprises - independently for the said first novolac resin and the said second novolac resin - an aromatic nucleus bearing at least one aldehyde function.

7. Composition according to the preceding claim, in which the said aromatic nucleus also bears a carbonylalkyl and/or hydroxyalkyl radical.

8. Composition according to any one of the preceding claims, in which the molar ratio of the said second epoxide-functionalized novolac resin to the said first epoxide-functionalized novolac resin is between 1:4 and 1:1.

9. Composition according to any one of the preceding claims, comprising between 0.1 and 1.5 phr (parts by weight per hundred parts of novolac epoxy resins) of a reinforcing, elastomeric or thermoplastic filler.

10. Composition according to any one of the preceding claims, in which the said amine-type curing agent comprises at least two primary amine functions located on at least one six-membered aromatic ring, the said at least one six-membered aromatic ring comprising:

   - at least one primary amine function, and
   - at least two radicals Ri, which are identical or different and selected from the group consisting of linear or branched $C_1$-$C_6$ alkyl radicals, halogens, and ethers, ketones and esters substituted by linear or branched $C_1$-$C_6$ alkyl radicals,

   such that the at least one six-membered aromatic ring does not comprise a hydrogen atom located in the ortho position relative to the primary amine functions, the said amine-type curing agent comprising at least one second primary amine function located on the said at least one six-membered aromatic ring or on an optional second six-membered aromatic ring of the said amine-type curing agent.

11. Composition according to any one of the preceding claims, in which the amount of curing agent is adjusted so that there are two molar equivalents of epoxide per amine function.

12. Composition according to any one of Claims 1 to 9, in which the said phenolic curing agent comprises at least two hydroxyl functions located on at least one aromatic ring having six carbon atoms, at least one position ortho to each of the said hydroxyl functions being unsubstituted.

13. Composite comprising a composition according to any one of Claims 1 to 12 and at least one fibre.

14. Semi-finished article comprising a composite according to Claim 13 covered with a rubber composition matrix.

15. Tyre comprising a composition according to any of Claims 1 to 12 or a composite according to Claim 13 or a semi-finished article according to Claim 14.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5837077 A
- EP 0101400 A
- GB 2478343 A
- US 8779036 B
- CA 1337088
- WO 2015189310 A1
- WO 0210269 A


**Littérature non-brevet citée dans la description**

- **KAUTSCH.** *Gummi Kunstst.,* 2004, vol. 57 (3), 82
- *CHEMICAL ABSTRACTS,* 9003-36-5
- *CHEMICAL ABSTRACTS,* 29690-82-2